# EUROPÄISCHE PATENTSCHRIFT

(11) **EP 0 763 586 B1**
(45) Veröffentlichungstag und Bekanntmachung des Hinweises auf die Patenterteilung: **12.06.2002**
(21) Anmeldenummer: 96114363.3
(22) Anmeldetag: 07.09.1996
(51) Int. Cl.: C10C 3/02, C01B 31/02, C04B 35/52

(54) **Pyrolisierbare Zusammensetzung zur Herstellung von borhaltigem Polyaromatenmesophasenmaterial und Kohlenstoffen und Verfahren zum Herstellen von Polyaromatenmesophasen und Kohlenstoff**
Pyrolysable composition for preparing boron-containing polyaromatic mesophases and carbon products, and process for their preparation
Composition pyrolysable pour la préparation des mésophases polyaromatiques et des carbones contenant du bore, et leur procédé de préparation

(30) Priorität: 15.09.1995 DE 19534363
(43) Veröffentlichungstag der Anmeldung: 19.03.1997
(73) Patentinhaber: Schunk Kohlenstofftechnik GmbH, D-35452 Heuchelheim (DE)
(72) Erfinder: Hüttinger, Klaus J., Dr., 76128 Karlsruhe (DE); Eichner, Thomas, 76131 Karlruhe (DE)
(74) Vertreter: Sternagel, Hans-Günther, Dr.

(56) Entgegenhaltungen:
- EP-A- 0 163 597
- EP-A- 0 277 284
- DE-A- 3 838 397
- US-A- 4 188 279

## Beschreibung

Die Erfindung betrifft pyrolisierbare Zusammensetzungen, die borhaltige Additive in Mischung mit Ausgangsstoffen für die Herstellung von borhaltigen Polyaromatenmesophasen, Polyaromatenmesophasen-Pechen und Kohlenstoffen durch Flüssigphasenpyrolyse enthalten. Die Erfindung schließt auch Pyrolyseverfahren der Zusammensetzungen ein, bei Temperaturen von 350°C bis 1000°C.

Die Flüssigphasenpyrolyse ist der wichtigste Prozeß zur Herstellung von technischen Kohlenstoffen. In der Regel verläuft die Kohlenstoffbildung über die Polyaromatenmesophase, ein nematisch-diskotischer Flüssigkristall, in dem das schichtartige Graphitgitter vorgebildet ist. Die Polyaromatenmesophase besitzt als Ausgangsstoff für technische Kohlenstoffprodukte wie Kohlenstoffasern und gesinterte Kohlenstoffe einzigartige Eigenschaften.

*Aus DE-A-38 38 397 ist ein Verfahren zur Herstellung pechähnliche bitumöse Stoffe enthaltender schmelzbarer Fasern oder feinteiliger Formkörper als Vorprodukte bekannt, bei dem Verflüssigung und*/*oder Filtration und*/*oder Sedimentation und*/*oder Extraktion unter Zusatz von Hilfsmitteln bei erhöhtem Druck und erhöhter Temperatur zur Anwendung gelangen. Überkritische Gasphasen und unterkritische komprimierte Gasphasen werden vermieden. Durch Inkorporation von geeigneten Bor-*, *Silizium- und Aluminiumverbindungen in die pechhaltigen Vorprodukte können oxidationsstabile Graphit-, Kohlenstoff- oder Interkalatfasern erzeugt werden.*

Borhaltige, mit Bor "dotierte" oder "legierte" Kohlenstoffe waren bisher ausschließlich durch chemische Gasphasenabscheidung, d.h. simultane Gasphasenpyrolyse von flüchtigen Kohlenwasserstoffen und Borverbindungen zugänglich. Diese Technik ist wegen der geringen Aufwachsgeschwindigkeit der borhaltigen Kohlenstoffe jedoch äußerst unwirtschaftlich. Andererseits besteht an borhaltigen Kohlenstoffen ein großes technisches Interesse. Bor ist ein hervorragender Graphitierungskatalysator, d.h. es beschleunigt die Umwandlung von weniger geordnetem Kohlenstoff in graphitischen Kohlenstoff, so daß eine Absenkung der Graphitierungstemperatur möglich ist. Darüber hinaus besitzt Bor weitere positive Eigenschaften in bezug auf Kohlenstoff bzw. Graphit. Durch Bor wird das Fermi-Niveau angehoben, so daß die Transporteigenschaften wie elektrische Leitfähigkeit und Wärmeleitfähigkeit verbessert werden. Schließlich hemmt Bor die Oxidation von Kohlenstoff bzw. Graphit bei Exposition in oxidierenden Atmosphären.

Die Herstellung von borhaltigen Kohlenstoffen durch die wesentlich wirtschaftlichere Flüssigphasenpyrolyse wäre nach vorigem ein bedeutender technischer Fortschritt. Das Problem der Realisierung liegt in der außerordentlich hohen Affinität des Bors zu Sauerstoff. Unter Atmosphärenbedingungen stabile Borverbindungen sind in der Regel sauerstoffhaltige Verbindungen. Diese sind wegen der Stabilität der Bor-Sauerstoff-Bindung für die Herstellung borhaltiger Polyaromatenmesophasen-Peche oder Polyaromatenmesophasen nicht oder kaum geeignet. Bor-Wasserstoff- oder Bor-Kohlenstoff-Wasserstoff-Verbindungen sind unter atmosphärischen Bedingungen nicht stabil.

Aufgabe der Erfindung ist es, eine durch Flüssigphasenpyrolyse zu borhaltigen Kohlenstoffprodukten, Polyaromatenmesophasen und Polyaromatenmesophasen-Pechen umsetzbare Zusammensetzung zu schaffen.

Diese Aufgabe wird gelöst durch eine Pyrolisierbare Zusammensetzung zur Herstellung von borhaltigen Polyaromatenmesophasen, Polyaromatenmesophasen-Pechen und Kohlenstoffprodukten enthaltend *(i)* bororganische Verbindungen bestehend aus den Elementen Bor, Wasserstoff, Kohlenstoff oder Bor, Wasserstoff, Kohlenstoff und/oder Stickstoff und/oder Sauerstoff und/oder Schwefel, *ausgewählt aus Komplexen aus Boran und einem dieses komplexierenden organischen Lösemittel, Pyrolyseprodukten borhaltiger Polymerer, Umsetzungsprodukte von Diboran mit den in der Zusammensetzung enthaltenen aromatenreichen Kohlenwasserstoffgemischen oder aromatischen Kohlenwasserstoffen* und *(ii)* aromatische Kohlenwasserstoffe oder aromatenreiche Kohlenwasserstoffgemische.

Typische Ausgangsstoffe für die vorstehend genannten kohlenstoffartigen Produkte sind technische, vorzugsweise aromatenreiche Kohlenwasserstoffgemische wie z.B. erdöl- und kohlenstämmige Öle, Teere und Peche; es können jedoch auch definierte Aromaten oder Aromatengemische sein.

Um Bor-Wasserstoff- oder Bor-Kohlenstoff-Wasserstoffverbindungen unter atmosphärischen Bedingungen zu stabilisieren, ist es bevorzugt, die borhaltigen Verbindungen durch ein komplexierendes organisches Lösemittel in einen Komplex zu überführen. Geeignete organische Lösemittel sind beispielsweise Pyridin, Piperzin, Tetrahydrofuran oder Mischungen dieser Bor komplexierenden Lösemittel.

Die Borkomplexe werden in aromatische Kohlenwasserstoffgemische enthaltendes flüssiges Steinkohlenteerpech langsam eingerührt. Die so erhaltene erfindungsgemäße Zusammensetzung kann dann bei geeigneten Temperaturen und Zeiten einer Pyrolysebehandlung unter Inertgas unterzogen werden.

Es wurde gefunden, daß das komplexierende Lösungsmittel während der Pyrolyse nahezu quantitativ verdampft, Bor nahezu quantitativ in den Pyrolyserückstand eingebaut wird, und, was von besonderer Bedeutung ist, daß Bor in der Polyaromatenmesophase angereichert wird. Untersuchungen der Rückstände mit Hilfe der Elektronenstrahlmikroanalyse gaben keinerlei Hinweise auf Bor-Sauerstoff-Verbindungen. Es wurden somit durch Co-Flüssigphasenpyrolyse von geeigneten Kohlenwasserstoffen und geeigneten Bor-Komplexen borhaltige Polyaromatenmesophasen-Peche, Polyaromatenmesophasen und Kohlenstoffe und Koks hergestellt.

Bei einer anderen Ausführungsform der Erfindung werden als organische Verbindungen Pyrolyseprodukte borhaltiger Polymeren in der Zusammensetzung verwendet.

Borhaltige Polymere lassen sich durch Umsetzung von Dienen, gegebenenfalls in Mischung mit Monoenen mit Diboran herstellen.

Als Beispiel für ein technisch attraktives Dien sei Divinylbenzol genannt. Die erhaltenen Polymere erweisen sich jedoch in organischen Lösemitteln als weitgehend unlöslich. Sie werden deshalb einer milden Pyrolysebehandlung unter Inertgas unterzogen, wobei sich in organischen Lösemitteln vollkommen lösliche, z.T. teerartige Produkte mit Borgehalten von einigen Prozenten ergeben, die für die erfindungsgemäße Zusammensetzung geeignet sind.

Mit ihrer Hilfe ist es möglich, beliebige borhaltige Polyaromatenmesophasen-Peche, Polyaromatenmesophasen oder Kohlenstoffe oder Koks durch Flüssigphasenpyrolyse herzustellen. Die Synthese eines typischen Polymers und dessen Konvertierung in ein lösliches, borhaltiges Produkt wird ebenfalls anhand eines Beispiels erläutert.

Nach der geglückten Synthese borhaltiger Polymere wurde als dritte Alternative die direkte Umsetzung von aromatischen Kohlenwasserstoffen mit Diboran untersucht und gefunden, daß man durch Einleiten von Diboran in beispielsweise Steinkohlenteerpech, welches für die Umsetzung mit dem gasförmigen Diboran durch Erhitzen verflüssigt wurde, eine Zusammensetzung erhalten wird, die pyrolisierbar ist. Dabei traten vor allem zu Beginn des Einleitens von Diboran exotherme Wärmetönungen auf, die auf Reaktionen des Diborans mit den Pechbestandteilen schließen lassen. Da ein Pech nicht nur reine Aromaten, sondern auch Heterocyclen enthält, ist nicht klar, ob hierbei eine Reaktion mit den Aromaten oder eine Umsetzung mit den Heterocyclen erfolgte. Pyrolyseuntersuchungen des so behandelten Peches mit oder ohne Zusatz von weiterem Pech ergaben in jedem Fall borhaltige Rückstände, so daß dieser Weg der Pyrolyse einer solchen Zusammensetzung eine Lösung zur Herstellung borhaltiger Polyaromatenmesophasen-Peche, Polyaromatenmesophasen und Kohlenstoffe durch Flüssigphasenpyrolyse darstellt.

Die Umsetzung von Diboran mit Aromaten oder aromatenreichen Kohlenwasserstoffen, z.B. technischen aromatenreichen Kohlenwasserstoffgemischen, wird so ausgeführt, daß das Reaktionsprodukt eine erfindungsgemäße Zusammensetzung ergibt, die direkt der Pyrolyse unterzogen werden kann.

Die Erfindung schließt auch Verfahren zum Herstellen von mit Bor "dotierten" oder mit Bor "legierten" Kohlenstoff, Koks, Polyaromatenmesophasen oder Polyaromatenmesophasen-Pech durch Flüssigphasenpyrolyse der erfindungsgemäßen pyrolisierbaren Zusammensetzungen ein, wobei das Pyrolyseprodukt nach Pyrolyse bei 350° bis 1000°C im Falle der Dotierung mit Bor ≤ 0.2 Gew.% Bor enthält und im Falle der "Legierung" mit Bor 0,5 bis 10 Gew.% Bor enthält. Dies wird erreicht durch Verwendung der dafür erforderlichen Menge an bororganischen Verbindungen in der pyrolysierbaren Zusammensetzung.

### Beispiel 1

19,77 g eines filtrierten Steinkohlenteerpeches mit einem Erweichungspunkt nach Mettler von 102°C wurden in einem Laborautoklaven aufgeschmolzen und nach Erreichen von etwa 120°C wurden 5,23 g Pyridin-Boran-Lösung unter ständigem Rühren zugetropft; die Menge der Pyridin-Boran-Lösung entsprach einem Borgehalt von 2% in bezug auf die Gesamteinwaage von 25 g. Nach Abkühlen wurde der Autoklav verschlossen, evakuiert und mit Argon als Inertgas geflutet. Dieser Prozeß wurde wiederholt und letztlich wurde ein Argondruck von 1 MPa eingestellt. Die Mischung wurde sodann im Autoklaven einer Pyrolysebehandlung von 5 h bei 400°C unterzogen.

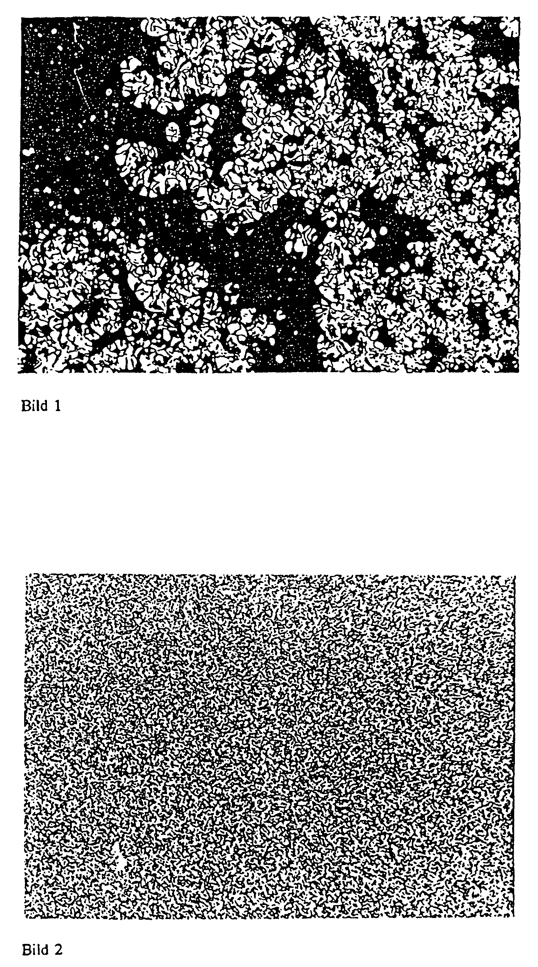

Die Analyse des Pyrolyseproduktes ergab einen Gehalt an Tetrahydrofuranunlöslichem von 65% und eine Koksausbeute von 70%. Die optische Mikrostruktur des erhaltenen Mesophasenpeches, aufgenommen im polarisierten Licht, ist in Bild 1 gezeigt (1 cm entspricht 60 µm). Es handelt sich um ein sphärolithisches Mesophasenpech, wobei die beginnende Koaleszens der Sphärolithe zu beobachten ist. Der unlösliche Anteil in Tetrahydrofuran entspricht dem Anteil an optisch anisotroper Mesophase. Der Borgehalt des Pyrolyseproduktes wurde durch Veraschen ermittelt. Er betrug 2,4%; bei völligem Einbau des Bors in den Pyrolyserückstand wäre ein Borgehalt von 2,8% zu erwarten gewesen. Der Borgehalt des Tetrahydrofuranunlöslichen des Pyrolyseproduktes, mit anderen Worten der Mesophase, wurde ebenfalls ermittelt, es ergab sich ein Wert von 3,1%; bei quantitativem Einbau des Bors in die Mesophase sollte der Wert 3,9% betragen. Untersuchungen mit Hilfe der Elektronenstrahl-Mikroanalyse zeigten eine völlig homogene Verteilung des Bors in der optisch anisotropen Mesophase; es wurden keinerlei Hinweise auf den Einbau von Sauerstoff gefunden.

### Beispiel 2

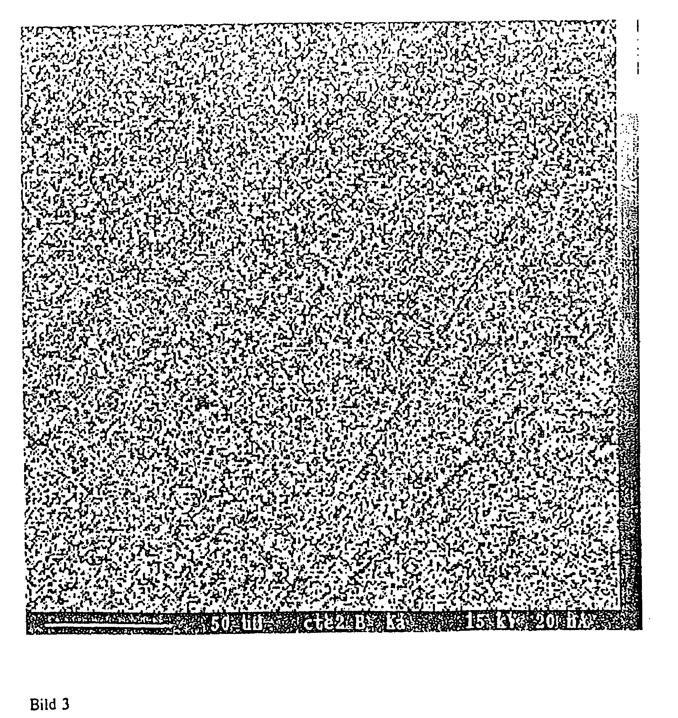

Dasselbe Experiment wie in Beispiel 1 wurde wiederholt, jedoch wurde die Pyridin-Boran-Lösung in solcher Menge dem Steinkohlenteerpech zugegeben, daß die Ausgangsmischung einen Borgehalt von 5% aufwies. Das Pyrolyseprodukt hatte folgende Eigenschaften: Unlöslichkeit in Tetrahydrofuran 95%, Koksausbeute 92%. Bild 2 (1 cm entspricht 60 µm) zeigt ein Schliffbild des Produktes, aufgenommen unter polarisiertem Licht. Man erkennt ein absolut homogenes, dichtes Produkt mit feinster Mosaikstruktur. Bild 3 (1 cm entspricht 18 µm) zeigt beispielhaft eine elektronenstrahl-mikroanalytische Aufnahme zur Dokumentation der Borverteilung von der Probe von Bild 2. Zunehmende Helligkeit bedeutet steigenden Borgehalt. Es läßt sich zweifelsfrei feststellen, daß das Bor absolut homogen in dem Pyrolyseprodukt verteilt bzw. eingebaut ist. Bestimmungen des Borgehaltes des Pyrolyseproduktes bzw. des in Tetrahydrofuran unlöslichen Anteils zeigten, daß das Bor zu etwa 93% in das Pyrolyseprodukt eingebaut wurde, und daß der in Tetrahydrofuran unlösliche Anteil knapp 10% Bor enthält.

Die beiden Beispiele wurden ausgewählt, um den Einfluß des Bors auf die Mikrostruktur der resultierenden Pyrolyserückstände zu dokumentieren. Das reine Pech zeigt im Polarisationsmikroskop eine Mikrostruktur mit großen Bereichen gleicher optischer Anisotropie; diese Bereiche werden mit zunehmendem Borgehalt drastisch vermindert. Das bedeutet, daß sich mit geringen Anteilen an Bor hochorientierte Kohlenstoffe herstellen lassen, was für die "Dotierung" mit Bor von besonderem Interesse ist. Bei höheren Borgehalten ergeben sich Pyrolyseprodukte mit drastisch verminderter optischer Anisotropie. "Legieren" mit Bor verleiht dem Pyrolyseprodukt somit völlig konträre Eigenschaften, die z.B. nach Sintern der pulverisierten Pyrolyseprodukte isotrope, mit Bor "legierte" Feinstkornkohlenstoffe mit hohen Festigkeiten erwarten lassen.

### Beispiel 3

In diesem Beispiel soll die Synthese eines borhaltigen Polymeren und dessen Konvertierung zu einem löslichen, bororganischem Produkt beschrieben werden.

Zur Synthese des Polymeren wurden 100 ml Divinylbenzol in 300 ml getrocknetem Tetrahydrofuran in einem Kolben vorgelegt. Die Apparatur wurde evakuiert und mit Argon geflutet. Hiernach wurde der Kolben mit Divinylbenzol auf Temperatur von Eiswasser gebracht, und es wurde mit dem Einleiten von Diboran mit Argon als Träger- und Verdünnungsgas begonnen. Nach Durchleiten von 0,2 Mol Diboran, das sich etwa über 1 h erstreckte, wurde die Reaktion abgebrochen.

Es war ein gelartiges Produkt entstanden, welches sich nach Erwärmen auf Raumtemperatur verfestigte. Das Polymere wurde im Vakuum bei Raumtemperatur von Tetrahydrofuran weitgehend befreit und anschließend unter einem Argondruck von 1 MPa einer Pyrolyse von 5 h bei 380°C unterzogen. Es ergab sich ein teerartiges Pyrolyseprodukt, das in Tetrahydrofuran zu 98,8% löslich war und eine überraschend hohe Koksausbeute von 57% ergab. Der Borgehalt dieses Pyrolyseproduktes betrug 6,5%; das im Polymeren enthaltene Bor wurde quantitativ in den Rückstand eingebaut.

Mit diesem bororganischen Produkt lassen sich nunmehr durch Co-Pyrolyse mit entsprechenden Kohlenwasserstoffgemischen Produkte beliebiger Borkonzentration herstellen.

## Patentansprüche

1. Pyrolisierbare Zusammensetzung zur Herstellung von borhaltigen Polyaromatenmesophasen, Polyaromatenmesophasen-Pechen und Kohlenstoffprodukten enthaltend (i) bororganische Verbindungen bestehend aus den Elementen Bor, Wasserstoff, Kohlenstoff oder Bor, Wasserstoff, Kohlenstoff und/oder Stickstoff und/oder Sauerstoff und/oder Schwefel, ausgewählt aus Komplexen aus Boran und einem dieses komplexierenden organischen Lösemittel, Pyrolyseprodukten borhaltiger Polymerer, Umsetzungsprodukte von Diboran mit den in der Zusammensetzung enthaltenen aromatenreichen Kohlenwasserstoffgemischen oder aromatischen Kohlenwasserstoffen und (ii) aromatische Kohlenwasserstoffe oder aromatenreiche Kohlenwasserstoffgemische.

2. Zusammensetzung nach Anspruch 1, **dadurch gekennzeichnet, dass** das Boran komplexierende Lösemittel Piperazin, Pyridin, Tetrahydrofuran oder eine Mischung derselben ist.

3. Zusammensetzung nach Anspruch 1, **dadurch gekennzeichnet, dass** die borhaltigen Polymere Umsetzungsprodukte von Dienen mit Diboran sind.

4. Zusammensetzung nach Anspruch 3, **dadurch gekennzeichnet, dass** die borhaitigen Polymere Umsetzungsprodukte von Gemischen von Dienen und Monoenen mit Diboran sind.

5. Zusammensetzung nach einem der Ansprüche 3 oder 4, **dadurch gekennzeichnet, dass** die Pyrolyseprodukte der borhaltigen Polymeren in organischen Lösemitteln löslich sind.

6. Verfahren zum Herstellen von borhaltigen Kohlenstoff, Koks, Polyaromatenmesophasen oder Polyaromatenmesophasen-Pech durch Flüssigphasenpyrolyse bei 350°C bis 1000°C einer Zusammensetzung nach einem der Ansprüche 1-5, wobei die Zusammensetzung vor der Pyrolyse die ausgewählten bororganischen Verbindungen in einer solchen Menge enthält, dass das Pyrolyseprodukt nach der Pyrolyse ≤ 0,2 Gew.% oder von 0.5 bis 10 Gew.% Bor enthält.

## Claims

1. Pyrolysable composition for the production of boron-containing polyaromatic mesophases, polyaromatic mesophase pitches and carbon products containing (i) organoboron compounds consisting of the elements boron, hydrogen, carbon or boron, hydrogen, carbon and/or nitrogen and/or oxygen and/or sulfur, selected from complexes of borane and an organic solvent complexing the latter, pyrolysis products of boron-containing polymers, reaction products of diborane with the high aromatic content hydrocarbon mixtures or aromatic hydrocarbons contained in the composition, and (ii) aromatic hydrocarbons or high aromatic content hydrocarbon mixtures.

2. Composition according to claim 1, **characterised in that** the borane-complexing solvent is piperazine, pyridine, tetrahydrofuran or a mixture thereof.

3. Composition according to claim 1, **characterised in that** the boron-containing polymers are reaction products of dienes with diborane.

4. Composition according to claim 3, **characterised in that** the boron-containing polymers are reaction products of mixtures of dienes and monoenes with diborane.

5. Composition according to one of claims 3 and 4, **characterised in that** the pyrolysis products of the boron-containing polymers are soluble in organic solvents.

6. Process for the production of boron-containing carbon, coke, polyaromatic mesophases or polyaromatic mesophase pitch by liquid phase pyrolysis at 350°C to 1000°C of a composition according to one of claims 1 to 5, wherein the composition before the pyrolysis contains the selected organoboron compounds in such an amount that the pyrolysis product after the pyrolysis contains ≤ 0.2 wt.% boron or from 0.5 to 10 wt.% boron.

## Revendications

1. Composition pyrolysable pour la préparation de mésophases polyaromatiques, de brais de mésophases polyaromatiques et de produits carbonés contenant du bore, contenant (i) des composés organiques de bore constitués des éléments bore, hydrogène, carbone ou bore, hydrogène, carbone et/ou azote et/ou oxygène et/ou soufre, choisis parmi les complexes de borane et d'un solvant organique complexant ce dernier, des produits de pyrolyse de polymères contenant du bore, des produits de réaction du diborane avec des mélanges d'hydrocarbures riches en aromatiques contenus dans la composition ou des hydrocarbures aromatiques et (ii) des hydrocarbures aromatiques ou des mélanges d'hydrocarbures riches en aromatiques.

2. Composition selon la revendication 1, **caractérisée en ce que** le solvant complexant le bore est la pipérazine, la pyridine, le tétrahydrofurane ou un mélangé de ceux-ci.

3. Composition selon la revendication 1, **caractérisée en ce que** les polymères contenant du bore sont des produits de réaction de diènes avec du diborane.

4. Composition selon la revendication 3, **caractérisée en ce que** les polymères contenant du bore sont des produits de réaction de mélanges de diènes et de monoènes avec du diborane.

5. Composition selon l'une des revendications 3 ou 4, **caractérisée en ce que** les produits de pyrolyse des polymères contenant du bore sont solubles dans des solvants organiques.

6. Procédé de préparation de carbone, de cokes, de mésophases polyaromatiques ou de brais de mésophases polyaromatiques contenant du bore par pyrolyse en phase liquide entre 350°C et 1000°C d'une composition selon l'une des revendications 1 à 5, la composition contenant, avant pyrolyse, les composés organiques de bore choisis en quantité telle que le produit de pyrolyse contienne après pyrolyse ≤ 0,2 % en poids ou 0,5 à 10 % en poids de bore.
